# FASCICULE DE BREVET EUROPEEN

(11) **EP 1 963 726 B1**
(45) Date de publication et mention de la délivrance du brevet: **16.10.2013**
(21) Numéro de dépôt: 06830664.6
(22) Date de dépôt: 15.12.2006
(51) Int. Cl.: F16L 15/08, E21B 17/042, E21B 43/10, G01N 3/46

(54) **PROTECTION EXTERNE DE JOINTS FILETES TUBULAIRES EXPANSIBLES**
AUSSENSCHUTZ FÜR EXPANDIERBARE RÖHRENFÖRMIGE GEWINDEVERBINDUNGEN
EXTERNAL PROTECTION FOR EXPANDABLE TUBULAR THREADED JOINTS

(30) Priorité: 23.12.2005 FR 0513279
(43) Date de publication de la demande: 03.09.2008
(73) Titulaire: VALLOUREC MANNESMANN OIL & GAS FRANCE, 59620 Aulnoye-Aymeries (FR)
(72) Inventeur: BREZIAT, Nicolas, F-59300 Valenciennes (FR); DUQUESNE, Benoît, F-59300 Valenciennes (FR); HENAUT, Philippe, F-59570 La Longueville (FR)
(74) Mandataire: Pellicani, Félix Angelo
(86) Numéro de dépôt international: PCT/EP2006/069775
(87) Numéro de publication internationale: WO 2007/071624

(56) Documents cités:
- WO-A-02/16907
- WO-A-03/059549
- DE-A1- 19 502 936
- FR-A- 2 841 626
- US-A- 2 546 295
- US-A- 3 268 275
- US-A- 3 343 890
- US-A1- 2001 026 069
- US-A1- 2005 127 671

## Description

La présente invention concerne un élément femelle d'un joint fileté tubulaire apte à subir une expansion diamétrale dans le domaine des déformations plastiques muni d'un moyen de protection externe.

Un tel joint fileté ou connexion tubulaire peut être obtenu par l'assemblage des extrémités filetées de deux tubes de grande longueur ou d'un tube de grande longueur et d'un manchon pour constituer notamment des colonnes de tubes de cuvelage ou de production pour des puits d'hydrocarbures ou pour des puits similaires, par exemple en géothermie.

La mise en place de telles colonnes de tubes engendre souvent des chocs et des rayures sur la périphérie extérieure des tubes qui peuvent être occasionnés par exemple, par le frottement des tubes sur les parois du puits quand il n'est pas cuvelé ou sur des aspérités créées lors de l'ouverture de fenêtres dans la paroi du cuvelage pour réaliser des jonctions multilatérales (puits déviés).

Lorsqu'une expansion diamétrale des tubes dans le domaine des déformations plastiques est réalisée ensuite in situ, par exemple, pour augmenter le taux de récupération d'un puits ancien en descendant une colonne de faible encombrement et en expandant ensuite son diamètre ou encore pour colmater les trous éventuels d'un tube percé par la corrosion ou par le frottement des tiges de forage, les rayures telles que décrites précédemment peuvent s'ouvrir; notamment dans les parties de faible épaisseur du joint fileté tubulaire, et provoquer, ainsi, la rupture de la paroi du tube à cet endroit.

Le brevet FR 2 811 056 décrit un joint fileté tubulaire apte à subir une expansion diamétrale. Un tel joint ne divulgue aucune caractéristique de protection de la surface périphérique extérieure des tubes susceptibles d'entrer directement en contact avec un corps choquant ou rayant extérieur au tube.

La demande internationale WO 03/059549 décrit une méthode d'expansion radiale dans le domaine plastique d'un joint fileté tubulaire qui divulgue l'utilisation d'une manchette tubulaire enfilée avant vissage sur l'extrémité libre de l'élément femelle et couplée après vissage aux éléments filetés mâle et femelle permettant :
- de protéger les surfaces pénphériques extérieures opposées au filetage lors de la manutention et de l'insertion de la colonne de tubes dans le puits en évitant la déterioration desdites surfaces qui pourrait entraîner des concentrations de contraintes et conduire à une rupture catastrophique de la connexion lors d'une expansion plastique ultérieure,
- d'avoir, après l'expansion radiale dans le domaine plastique, une étanchéité métal-métal aux fluides entre des parties de la surface périphérique intérieure de la dite manchette et les surfaces périphériques opposées au filetage des éléments filetés mâle et femelle.

Un des inconvénients de cette méthode est que la manchette doit être disposée sur chantier ce qui engendre une perte de temps et de productivité lors de la mise en place de la colonne.

On connaît également, par la demande internationale WO 2004/003416, un joint fileté tubulaire pour expansion dans le domaine plastique comprenant un premier element mâle et un second élément femelle mutuellement assemble par vissage dont l'un au moins des premier et second éléments comporte une levre non filetée qui s'étend entre le filetage et l'extrémité libre de l'un au moins desdits éléments et qui présente une surface d'etanchéité propre à être en contact étanche avec la surface en regard de l'autre élément après expansion. Un tel joint comporte une manchette tubulaire enfilée avant vissage sur le second élément femelle sur chantier et positionnée de telle sorte qu'elle s'etend axialement essentiellement en regard de la dite surface d'étanchéité. Une telle manchette vise à améliorer les performances des surfaces d'étanchéité disposées sur les éléments filetés du joint mais réalise aussi intrinsèquement une protection externe des éléments mâle et femelle et notamment de leurs extrémités minces. Cette manchette peut être réalisée sans déborder de l'élément femelle et être couplée seulement à cet élément, notamment par collage.

Le document US-A- 3 268 275 (figure 10) décrit un protecteur pour un joint dit selon la terminologie anglo-saxonne « tool-joint » (« joint-outil ») d'une tige de forage ainsi qu'un moyen de renforcement du joint pouvant se présenter sous la forme d'anneaux ou encore d'un manchon. Ce document propose de fournir une protection contre des endommagements du joint consécutifs à des chocs répétés contre les parois d'un trou de forage ou générés du fait du gonflement et de la déchirure du joint. Le document US-A-3 268 275, figure 10, divulgue toutes les caractéristiques du préambule de la revendication 1 de l'invention.

La présente invention a pour but de proposer un autre moyen de protection externe d'un élément femelle permettant d'assurer non seulement la non propagation d'amorces de rupture telles que des rayures ou des chocs dans l'élément femelle mais aussi le maintien intégral du dit moyen de protection, avant, pendant ou après expansion en évitant sa chute en tout ou partie au fond du puits par exemple.

L'invention concerne un élément femelle d'un joint fileté tubulaire apte à subir une expansion diamétrale dans le domaine des deformations plastiques disposé à une extrémité d'un composant tubulaire. Le composant tubulaire peut notamment être un tube de plusieurs mètres de longueur ou un manchon relativement court (100 à 500 mm) de jonction de deux tubes de plusieurs mètres de longueur.

L'invention a pour objet un élément femelle d'un joint fileté tubulaire selon la revendication 1.

Selon une caractéristique principale, l'élément femelle comprend sur sa périphérie extérieure :
- un moyen d'absorption d'énergie de rayure d'un corps rayant susceptible d'être en contact extérieurement avec l'élément femelle,
- un moyen de maintien du dit moyen d'absorption d'énergie de rayure destiné à empêcher la libération de débns du dit moyen d'absorption d'énergie de rayure lors d'une expansion du joint fileté tubulaire.

Par la suite, le dit moyen d'absorption d'énergie de rayure est appelé moyen d'absorption.

Les dits moyens d'absorpton et de maintien sont disposés sensiblement à partir de l'extremité libre de l'élement femelle.

>

Le dit moyen d'absorption est en métal ou alliage métallique choisi parmi les métaux et alliages ductiles.

Le dit moyen de maintien est un revêtement réalisé sur le dit moyen d'absorption.

Le dit moyen de maintien déborde axialement du dit moyen d'absorption de manière à recouvrir l'élément femelle sur au moins une partie de celui-ci.

Le dit moyen de maintien comprend un matériau synthétique plastique, choisi de préférence parmi les élastomères.

Avantageusement, les dits moyens d'absorption et de maintien ne se projettent pas axialement au delà de l'extrémité libre de l'élément femelle.

Avantageusement encore, les dits moyens d'absorption et de maintien sont continus sur toute la circonférence de l'élément femelle.

Avantageusement, les dits moyens d'absorption et de maintien sont disposés sur l'élément femelle en usine lors de la fabrication du dit élément femelle.

Selon un mode de réalisation, le dit moyen d'absorption est une couche déposée sur la surface de l'élément femelle.

De préférence, la dite couche déposée est obtenue selon un procédé de dépôt par voie sèche.

Préférentiellement, l'épaisseur totale de l'ensemble moyen d'absorption et moyen de maintien est comprise entre 0,5 et 5 mm.

L'adhérence entre le dit moyen d'absorption et le dit moyen de maintien et/ou la périphérie extérieure de l'élément femelle est avantageusement améliorée par l'application d'une peinture d'adhérisation sur le dit moyen d'absorption et/ou la partie de la dite périphérie extérieure de l'élément femelle en contact avec le dit moyen de maintien.

L'invention concerne également un joint fileté tubulaire comprenant un élément femelle selon l'invention et un élément mâle apte à coopérer par vissage avec le dit élément femelle. Selon l'invention, le dit élément mâle n'est pas en contact avec les dits moyens d'absorption et de maintien.

On a recherché une méthode d'appréciation de l'efficacité d'un moyen d'absorption disposé sur un élément femelle d'un joint fileté tubulaire en cherchant à reproduire les conditions typiques de rayure sur puits de manière reproductible.

La méthode d'appréciation de l'efficacité du dit moyen d'absorption consiste à disposer sur un dispositif d'essai de rayure une virole de longueur donnée d'un composant tubulaire munie extérieurement d'un moyen d'absorption.

Ce dispositif d'essai de rayure comprend :
- un outil de réalisation de rayures apte à entrer extérieurement en contact avec la dite virole,
- un moyen d'application d'une force radiale donnée sur le dit outil, force dirigée normalement à la dite virole et vers la dite virole ou d'une force radiale donnée sur la dite virole, force dans ce cas dirigée normalement au dit outil et vers le dit outil,
- un moyen de déplacement relatif de translation de la dite virole par rapport au dit outil parallèlement à l'axe de la dite virole,

- On exerce ensuite un régime de force donné entre le dit outil et la dite virole durant un temps donné pendant que la dite virole est soumise à un déplacement axial relatif par rapport au dit outil avec un régime de vitesse de déplacement relatif donné durant le dit temps donné.
- A l'issu de l'essai de rayure, on détermine la présence ou non d'une rayure sur la dite virole sous le dit moyen d'absorption.

Avantageusement, le dit régime de vitesse de déplacement relatif et/ou la dite force sont constants pendant une fraction substantielle de la durée de l'essai.

Afin de déterminer quantitativement la capacité d'absorption d'énergie de rayure du moyen d'absorption, on mesure préférentiellement la profondeur maximale de la rayure en effectuant un relevé du profil transversal de la rayure.

Pour apprécier l'efficacité globale d'une protection externe d'un élément femelle d'un joint fileté expansible, la dite virole peut être munie extérieurement d'un moyen de maintien du dit moyen d'absorption et être soumise après l'essai de rayure à une expansion diamétrale d'un pourcentage donné dans le domaine des déformations plastiques.

On constate alors la fissuration ou non de la virole et la présence ou non de débris et/ou morceaux des dits moyens d'absorption et/ou de maintien.

Les caractéristiques et avantages de l'invention apparaîtront à l'examen de la description détaillée ci-après, et des dessins annexés, sur lesquels :
- La figure 1 représente un joint fileté tubulaire apte à être expansé muni d'un moyen de protection externe.
- La figure 2 représente un mode de réalisation selon l'invention d'un élément femelle d'un joint fileté tubulaire du type de la figure 1.
- La figure 3 représente un dispositif d'essai de rayure.
- Les figures 4a et 4b représentent différentes formes d'outils de réalisation de rayure. La figure 4b est une forme préférentielle.
- La figure 5 présente une courbe d'étalonnage force/profondeur de rayures avec l'outil présenté figure 4b.
- La figure 6 est une représentation schématique de l'essai de rayure.
- La figure 7 représente un dispositif d'essai d'expansion.

La description détaillée ci-dessous et les dessins s'y référant ne sont qu'un exemple du mode de réalisation de la présente invention et ne limitent pas la portée de celle-ci à cet exemple.

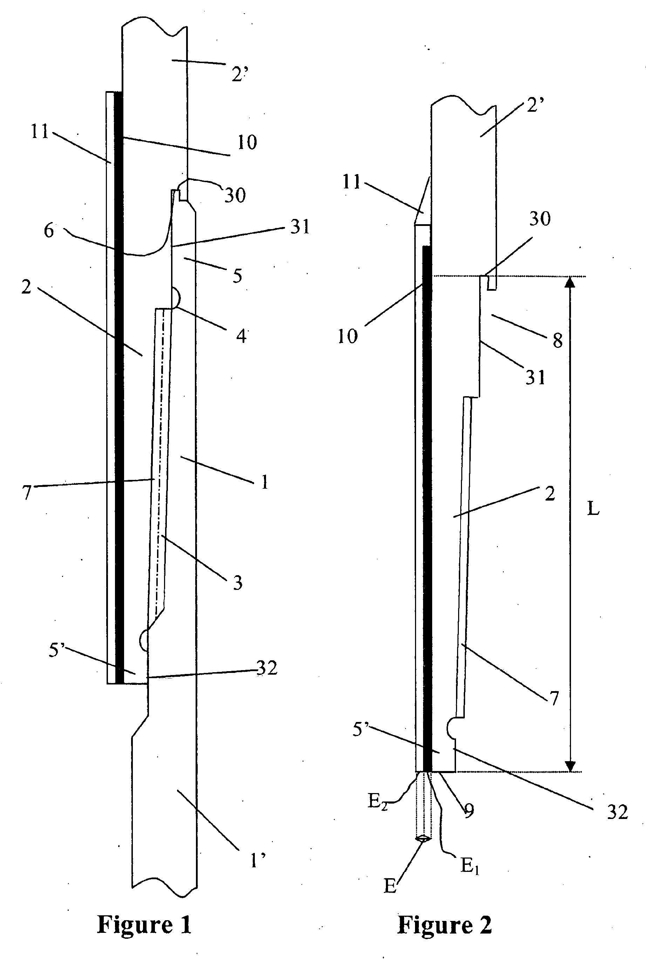

La figure 1 représente un joint fileté tubulaire tel que celui décrit dans la demande internationale WO 2004/003416 à l'état vissé en butée avant toute opération d'opération d'expansion diamétrale.

Il comprend un élément mâle 1 disposé en extrémité d'un premier élément tubulaire 1' est un élément femelle 2 disposé en extrémité d'un second élément tubulaire 2'.

L'élément femelle 2 est muni d'un moyen d'absorption 10 et d'un moyen de maintien 11 du dit moyen d'absorption 10. Les dits moyens 10 et 11 ne se projettent pas axialement au delà de l'extrémité libre de l'élément femelle 2 et ne sont par conséquent pas en contact avec l'élément mâle 1.

L'élément mâle 1 comprend un filetage mâle conique 3 et se prolonge vers son extrémité libre par une partie non filetée constituée par une gorgé 4 et par une lèvre 5 et se termine par une surface annulaire d'extrémité libre mâle 6.

L'élément femelle 2 comprend un filetage femelle 7 homologue du filetage mâle conique 3 et une partie non filetée formant un logement 8 pour correspondre et coopérer avec la lèvre 5 de l'élément mâle 1 et la surface annulaire d'extrémité libre mâle 6, cette dernière étant en butée axiale contre une surface d'épaulement 30 du logement 8.

Comme expliqué dans la demande internationale WO 2004/003416, lors de l'expansion diamétrale dans le domaine plastique, l'encastrement de la surface annulaire d'extrémité mâle 6 par la surface correspondante 30 du logement 8 de l'élément femelle 2 permet de maintenir radialement la surface annulaire d'extrémité mâle 6 et on obtient un serrage radial étanche entre une partie de la surface périphérique extérieure de la lèvre 5 et une partie de la surface périphérique intérieure 31 du logement 8 de l'élément femelle 2.

L'élément femelle 2 se prolonge au delà du filetage par une lèvre 5' dont une partie de la surface périphérique interne 32 est serrée radialement contre une partie d'une surface périphérique extérieure correspondante située à la base de l'élément mâle 1 après vissage et/ou après expansion.

En variantes non représentées, il est possible par exemple d'avoir :
- d'autres formes de surfaces d'extrémité,
- une butée centrale ou en extrémité femelle plutôt qu'en extrémité mâle,
- aucune ou une seule surface d'étanchéité sur chaque élément,
- des types de filetages différents (cylindriques à un ou plusieurs étages, coniques à plusieurs étages...).

Des moyens d'absorption 10 et de maintien 11 sont disposés sur l'élément femelle 2 en usine lors de la fabrication du dit élément femelle, ce qui présente l'avantage d'être réalisé dans un environnement propre et de faire gagner du temps sur chantier en évitant le montage des dits moyens d'absorption 10 et de maintien 11 lors de la mise en place de la colonne.

Un autre avantage de la disposition des dits moyens d'absorption 10 et de maintien 11 en usine lors de la fabrication dudit élément femelle est la protection externe du dit élément femelle 2 avant vissage dont la périphérie extérieure peut être exposée à des chocs lors de la manutention des tubes et/ou de leur transport.

La figure 2 représente uniquement l'élément femelle 2 muni des moyens d'absorption 10 et de maintien 11 disposés selon un mode particulier de réalisation de l'invention.

Ce mode particulier de l'invention illustré figure 2 a pour principe la superposition du moyen d'absorption 10 et du moyen de maintien 11 du dit moyen d'absorption 10.

Les moyens d'absorption 10 et de maintien 11 sont disposés sensiblement à partir de l'extrémité libre 9 de l'élément femelle sans déborder axialement et couvrent toute la circonférence de l'élément femelle 2.

Avantageusement, les moyens d'absorption 10 et de maintien 11 s'étendent axialement un peu au delà de la longueur de l'élément femelle 2.

On veut dire par là que la longueur axiale des moyens d'absorption 10 et de maintien 11 est légèrement supérieure à la longueur de tube perdue lors du vissage L (make up loss). La longueur L est par exemple de 50 à 200 mm selon le diamètre extérieur du second élément tubulaire 2' si celui-ci est compris entre 50 mm à 340 mm.

Le moyen d'absorption 10 permet d'éviter la propagation de fissures dans l'élément femelle 2 lors de l'expansion et le moyen de maintien 11 du moyen d'absorption 10 est apte à rester en place lors de l'expansion sans s'écailler ni laisser échapper de débris.

Le diamètre de l'élément femelle 2 pouvant par exemple être expansé de 5 à 25%, les propriétés anti-rayure du moyen d'absorption 10 ne sont pas exigées lors de l'expansion ni par la suite en service dans le puits. Ainsi, le moyen d'absorption 10 peut se fissurer pendant ou après expansion, ou se dégrader sur un plan plus général.

L'épaisseur totale E des moyens d'absorption 10 et de maintien 11 est donc choisie de manière à être ni trop faible pour éviter que les rayures ne traversent le moyen d'absorption 10, ni trop forte pour éviter une perte d'adhérence du moyen de maintien 11 sur l'élément femelle 2, un encombrement diamétral excessif et un effort supplémentaire d'expansion excessif par rapport à celui sur tube (un surcroît d'effort inférieur ou égal à environ 10% est souhaitable).

L'épaisseur totale E des moyens d'absorption 10 et de maintien 11 est de préférence comprise entre 0,5 et 5 mm et par exemple égale à 2,5 mm.

Ceci présente un avantage par rapport à la manchette tubulaire décrite dans la demande internationale WO 2003/059549 qui présente un encombrement plus important et qui nécessite un effort supplémentaire lors de l'expansion.

Le moyen d'absorption 10 est une couche déposée sur la surface de l'élément femelle 2. Cette couche peut être déposée par un procédé par voie sèche comme par exemple la projection thermique.

Le principe de la projection thermique est d'injecter le matériau du revêtement désiré dans une source chaude (flamme, plasma ou arc électrique) sous forme pulvérulente ou sous forme de fil. Le matériau est alors fondu sous forme de fines gouttelettes qui sont alors projetées sous l'effet du débit de gaz de la source chaude pour aller s'écraser à grande vitesse sur le substrat à revêtir. Celles-ci se refroidissent extrêmement rapidement en cédant leurs calories au substrat ou aux couches précédemment déposées. L'accrochage avec le substrat est alors très intime.

Avantageusement, ladite couche est déposée par plasma ou par HVOF (High Velocity Oxy-fuel Flame), ce dernier procédé conduisant à des revêtements plus denses et plus cohésifs.

Pour favoriser l'adhésion de la dite couche, une préparation de surface mécanique de l'élément femelle 2 est réalisée, telle qu'un sablage ou un usinage, complétée avantageusement par une sous-couche d'accrochage comme de type Ni-Al.

Le moyen d'absorption 10 est en métal ou alliage métallique choisi parmi les métaux et alliages ductiles, comme par exemple le cuivre pur de type A1, les alliages de cuivre comme Cu-Al (85%-15% en poids), les alliages de zinc comme Zn-Al (80%-20% en poids), les alliages de nickel comme Ni-Al (95%-5% en poids) ou les alliages Fe-Mn-C (ou aciers au manganèse) à structure austénitique.

Ces métaux ou alliages ductiles se distinguent des matériaux non ductiles métalliques ou non métalliques tel que par exemple le chrome dur, le molybdène, les carbures métalliques, les céramiques.

Dans l'exemple considéré, la dite couche peut être un acier au manganèse ou un alliage de Zn-Al (85%-15% en poids) et son épaisseur E1 est par exemple de 2 mm, ce qui est suffisant pour empêcher la formation de rayures traversant ta dite couche comme on le verra ci-après dans les essais réalisés.

Le moyen de maintien 11 du moyen d'absorption 10 est un revêtement réalisé sur le moyen d'absorption 10 et peut être obtenu, par exemple, par la réalisation de bandes appliquées manuellement sur le moyen d'absorption 10, tenues temporairement en place par une enveloppe de contention et si nécessaire passées en autoclave (selon le matériau choisi ; voir ci-après).

Dans le but de garantir la tenue à l'expansion sans émission de débris du moyen d'absorption 10, le moyen de maintien 11 déborde axialement du moyen d'absorption 10 de manière à recouvrir au moins une partie de la périphérie extérieure de l'élément femelle 2 afin de fixer la position des morceaux du moyen d'absorption 10 éventuellement cassés après expansion dans le domaine plastique.

Dans une variante de l'invention non représentée, le moyen de maintien 11 peut noyer complètement le moyen d'absorption 10.

Dans le puits, les joints filetés tubulaires sont soumis non seulement à des températures qui peuvent varier de 20 à 180°C, mais aussi à la présence de graisses, ciments, boues, pétrole brut ou gaz et/ou encore à des environnements acides avec des risques de corrosion induite et à des contraintes mécaniques de traction-compression, de pression interne, de flexion, de torsion qui peuvent agir seules ou en combinaison entre elles. Lors du stockage et/ou du transport des tubes, ces derniers peuvent être de plus soumis à des températures pouvant aller de + 40°C à - 50°C.

Le choix du matériau du moyen de maintien 11 se fait donc avantageusement parmi les matériaux qui allient une tenue adéquate dans le domaine de températures considéré, une bonne résistance chimique, une forte capacité de déformation et une excellente adhérence au métal.

Préférentiellement, le moyen de maintien 11 est en matériau synthétique plastique.

Il est préférable que le matériau synthétique plastique présente un allongement à rupture supérieur ou égal à 30% et préférentiellement à 40% lors d'un essai de traction réalisé selon la norme NFT 46002 afin de conserver son intégrité après expansion. Très préférentiellement, le matériau synthétique plastique sera choisi pour présenter un allongement à rupture supérieur ou égal à 50%.

Dans l'exemple considéré, le matériau synthétique plastique est un élastomère, par exemple du néoprène XHNBR et son épaisseur E2 est par exemple de 0,5 mm

En variante, on pourra utiliser des matériaux synthétiques plastiques faisant partie de la famille des thermoplastiques comme les polypropylènes, les polyuréthanes, ou les polyurées.

Avantageusement, on choisira un matériau thermoplastique dont le point de fusion ou de ramollissement est supérieur ou égal à 150°C et très avantageusement supérieur ou égal à 180°C.

On pourra aussi envisager un renforcement du matériau synthétique plastique par des particules ou des fibres de matériau dur comme par exemple des fibres de verre ou de la poudre de silice.

Il est souhaitable que le matériau synthétique plastique possède une adhérence minimum à l'élément femelle 2 et au moyen d'absorption 10 de 15 N/mm à 23°C selon la norme NF A 49-710.

Afin d'améliorer l'adhérence entre le moyen d'absorption 10 et le moyen de maintien 11 et/ou la périphérie extérieure de l'élément femelle 2 en contact avec le moyen de maintien 11, on applique une peinture d'adhérisation sur le moyen d'absorption 10 et/ou la périphérie extérieure de l'élément femelle 2 en contact avec le moyen de maintien 10.

La dite peinture d'adhérisation est par exemple une peinture solvantée à base de produits commercialisés par la société KALKER sous les dénominations W189 ou W190.

Une méthode d'appréciation de l'efficacité du moyen d'absorption 10 met en oeuvre un essai particulier de rayure complété si nécessaire par un essai d'expansion.

L'essai de rayure est mis en oeuvre à l'aide d'un dispositif particulier d'essai de rayure.

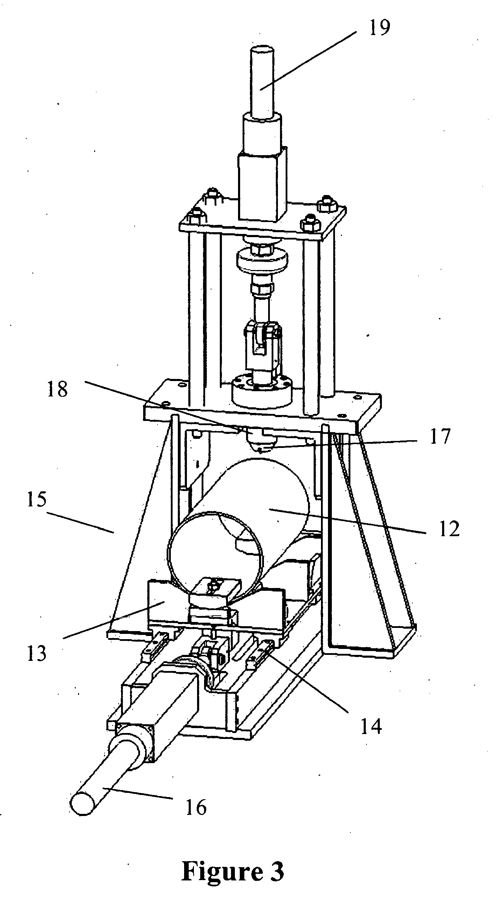

Un exemple de dispositif d'essai de rayure, permettant de reproduire une rayure sur un élément tubulaire telle que celles occasionnées dans les puits, est illustré sur la figure 3. Une longueur donnée d'un second élément tubulaire 2' de dimensions correspondant à l'élément femelle 2 (même diamètre extérieur et même épaisseur) appelée virole 12 revêtue extérieurement si nécessaire du moyen d'absorption 10 est positionnée sur un chariot 13 roulant sur des glissières 14 fixées sur le bâti 15 du dispositif et accouplé à la tige mobile d'un vérin de déplacement horizontal 16 parallèle à l'axe de la dite virole 12. Au dessus de la virole 12 se trouve un outil de réalisation de rayure 17 disposé sensiblement normalement à la virole 12 dans un porte-outil 18 relié à la tige mobile d'un vérin de déplacement vertical 19 permettant d'appliquer une force radiale F_{R} sur l'outil de réalisation de rayure 17 durant un temps donné pendant le déplacement de la virole 12 à la vitesse axiale de l'essai.

La force radiale F_{R} appliquée sur l'outil de réalisation de rayure 17 est dirigée normalement à la virole 12 et vers la virole 12.

En variante non représentée, le vérin de déplacement vertical 19 peut être relié à la virole 12 de manière à appliquer la force radiale F_{R} sur la virole 12 vers l'outil de réalisation de rayure 17 et le vérin de déplacement horizontal 16 peut déplacer l'outil de réalisation de rayure 17 en translation le long de l'axe de la virole 12.

L'outil de réalisation de rayure 17 est disposé sensiblement normalement à la virole 12 et présente une zone d'attaque ZA qui est celle par laquelle l'outil de réalisation de rayure 17 pénètre dans la virole 12 et une zone de sortie ZS opposée à la zone d'attaque ZA.

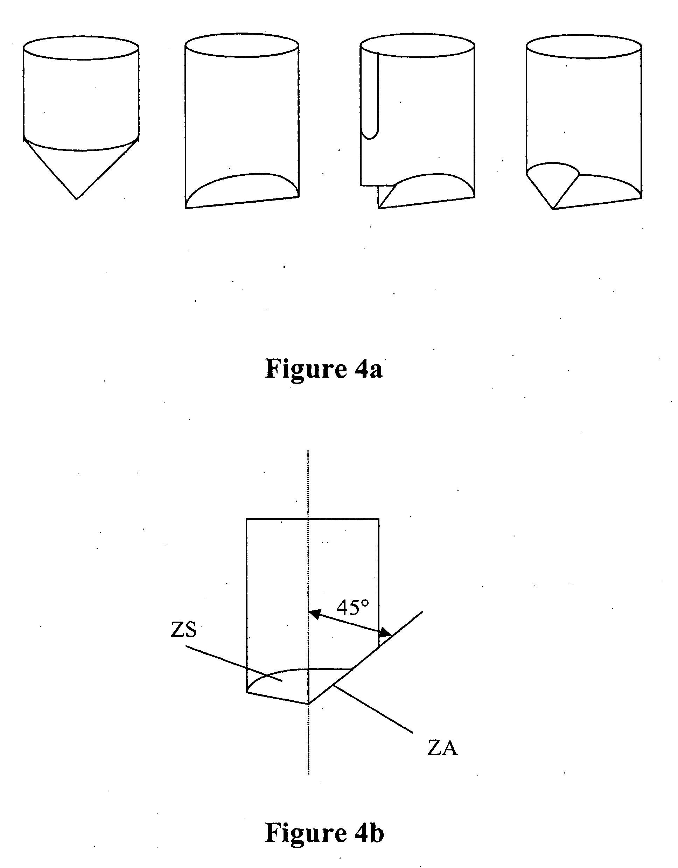

La figure 4a présente plusieurs formes géométriques possibles de l'outil de réalisation de rayure 17.

Préférentiellement, on choisit une forme globalement conique avec un angle d'attaque de 45° telle que schématisée sur la figure 4b et un matériau dont la dureté est supérieure ou égale à 60 HRC (acier rapide ou carbure).

La profondeur maximale de rayure PR peut être mesurée après l'essai de rayure à l'aide d'une palpation micro géométrique de surface en travers de la rayure à l'aide d'un profilomètre. Ce relevé peut être effectué en divers points le long de la rayure afin de déterminer très précisément la profondeur maximale PR de la rayure.

Afin de reproduire les conditions de rayure dans un puits, on détermine une profondeur maximale de rayure PR sur la virole 12 non revêtue du moyen d'absorption 10 à l'aide du dit dispositif d'essai. On obtient une courbe d'étalonnage donnant la profondeur maximale de rayure PR en fonction de la force radiale F_{R} appliquée sur la virole 12 non revêtue. Cette détermination peut se faire par exemple à une vitesse de déplacement de la virole 12 de 400 mm/sec avec l'outil de réalisation 17 de forme globalement conique présentée sur la figure 4b.

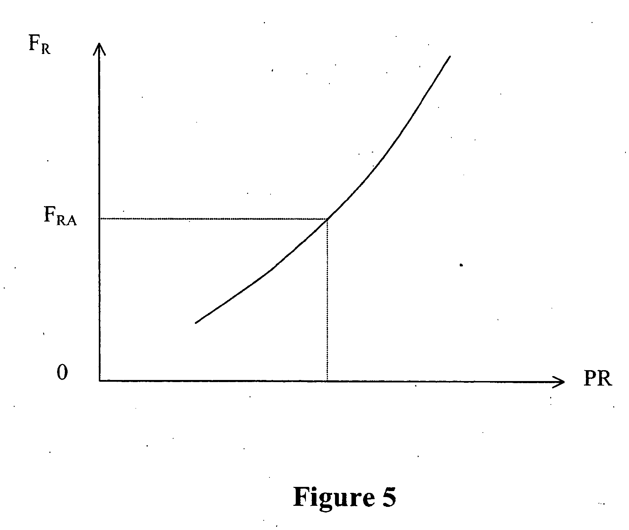

La figure 5 montre une telle courbe d'étalonnage permettant de corréler la force radiale F_{R} à une profondeur maximale de rayure PR obtenue sur une virole 12 sans moyen d'absorption 10.

On en déduit la force radiale adéquate F_{RA} à appliquer sur la virole 12 munie extérieurement du moyen d'absorption 10 pour obtenir une rayure dans des conditions équivalentes à celles de la virole 12 non revêtue avec la vitesse axiale de l'essai donnée..

La méthode d'appréciation de l'efficacité du moyen d'absorption 10 consiste donc en la réalisation d'un essai de rayure sur le dispositif d'essai tel que décrit précédemment, avec application de la force radiale adéquate F_{RA} sur la virole 12 munie extérieurement du moyen d'absorption 10.

La force radiale adéquate F_{RA} est par exemple de 80 DaN pour obtenir dans la virole 12 en acier peu allié de limite d'élasticité supérieure à 550 MPa et non munie du dit moyen d'absorption 10 une rayure de profondeur maximale PR de 600 µm à la dite vitesse axiale de l'essai de 400 mm/sec, ce qui représente des conditions extrêmement sévères de rayure comparées à celles généralement rencontrées sur puits.

On peut bien sûr choisir des conditions de rayure moins sévères qui sont liées aux conditions effectivement rencontrées dans le puits.

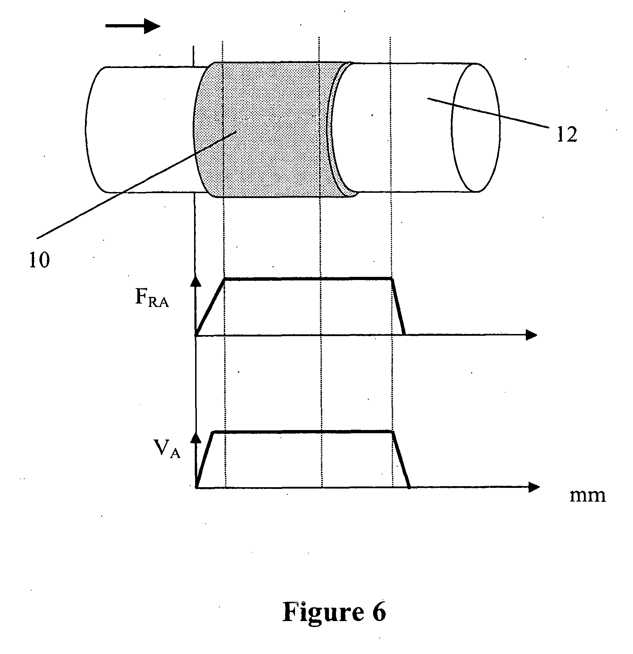

La figure 6 représente la variation de l'application de la force radiale adéquate F_{RA} au cours du déplacement axial relatif de la virole 12 munie extérieurement du moyen d'absorption 10. Pendant une fraction substantielle de l'essai de rayure d'au moins 50% (par exemple 90%) la force radiale adéquate F_{RA} est constante.

La figure 6 représente également la variation de la vitesse axiale de l'essai v_{A} au cours du déplacement axial relatif de la virole 12 munie extérieurement du moyen d'absorption. Pendant une fraction substantielle (au moins 50%) de l'essai de rayure, par exemple 90%, la vitesse axiale de l'essai v_{A} est constante.

A l'issu de l'essai de rayure tel que décrit, on détermine la profondeur maximale de la rayure PR obtenue sur la virole 12 munie extérieurement du moyen d'absorption 10 pour apprécier le caractère traversant ou non de la dite rayure sous le moyen d'absorption 10.

Le tableau 1 ci-après rassemble les résultats de l'essai de rayure du moyen d'absorption 10, selon l'invention, pour différents matériaux testés et appliqués en une couche d'épaisseur 2,5 mm.

**Tableau 1**

| Résultats des essais de rayure pour différents matériaux du moyen d'absorption 10 testés avec une force radiale adéquate F_{RA} de 80 DaN et une vitesse axiale de 400 mm/sec. | | | |
|---|---|---|---|
| **Moyen d'absorption** | **Type de moyen d'absorption** | **Profondeur de rayure (mm)** | **Rayure traversante** |
| Zn-Al (85%-15% en poids) | métal | 1,9 | non |
| Cu-Al (90%-10% en poids) | métal | 1,1 | non |
| Ni-Al (95%-5% en poids) | métal | < 1 | non |
| Acier Manganèse | métal | 1,1 | non |
| Carbure de tungstène | céramique | 1 | non |
| Endoprène 8500 | thermoplastique (polyuréthanne) | > 2,5 | oui |
| Eurokote 4820 | thermodurcissable (époxy) | > 2,5 | oui |
| K8161 | élastomère (XHNBR) | > 2,5 | oui |
| Référence (virole 12 non revêtue) | acier peu allié | 0,6 | - |

On constate que les matériaux synthétiques plastiques ne conviennent pas (rayure traversante) et qu'une épaisseur de la dite couche de 2 mm suffit pour les autres matériaux pour absorber l'énergie de rayure.

L'essai de rayure est avantageusement complété par un essai d'expansion qui renseigne sur l'adéquation de la protection externe aux contraintes d'une expansion (décollement, fissurations, débris...) et aussi sur l'effort supplémentaire à apporter pour expanser un joint fileté tubulaire dont l'élément femelle est protégé extérieurement.

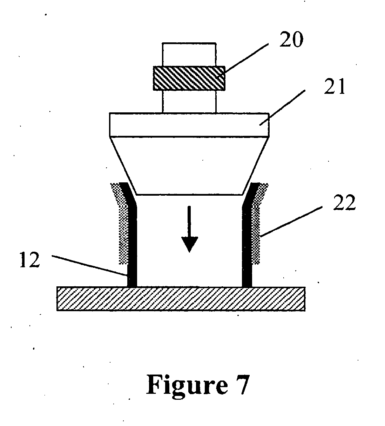

La figure 7 décrit l'essai d'expansion réalisé pour déterminer l'efficacité du moyen de protection 22 externe appliqué sur la virole 12. Cet essai consiste à faire passer un cône d'expansion 21 avantageusement muni d'un capteur d'effort 20 dans la virole 12 revêtue extérieurement du moyen de protection 22 de manière à élargir le diamètre intérieur de la virole 12 selon une déformation plastique donnée. Le cône d'expansion 21 est fixé par exemple sur le coulisseau d'une presse verticale d'une capacité de 150 tonnes où le capteur d'effort 20 est disposé à la base du cône d'expansion 21 de manière à mesurer l'effort supplémentaire nécessaire à l'expansion de la virole 12 munie de son moyen de protection 22 externe par rapport à l'expansion de la virole 12 non protégée.

Les essais d'expansion sont par exemple réalisés à un taux de 15% avec un cône d'expansion 21 d'une longueur de 200 mm et d'un demi-angle au sommet de 10°.

Le taux d'expansion est mesuré par la variation relative du diamètre intérieur de la virole 12.

On peut adapter le taux d'expansion à celui sur puits (généralement entre 5 et 25%).

Le tableau 2 rassemble les résultats de l'essai d'expansion pour différents matériaux de protection testés appliqués en une couche d'épaisseur de 2,5 mm.

L'expansion, dans l'exemple considéré, provoque le décollement de toutes les couches métalliques testées avec émission de débris dans le cas des couches Cu-Al (90%-10% en poids) et Ni-Al (95%-5% en poids). Les couches métalliques Zn-Al (85%-15% en poids) et acier manganèse ne présentent pas de débris après l'essai d'expansion. Seule la couche en élastomère XHNBR (K8161) reste parfaitement adhérente à la virole 12 et sans émission de débris.

L'effort mesuré est similaire à celui d'une virole 12 non revêtue.

Les différents matériaux des moyens de protection testés sur la virole 12 selon la méthode décrite ci-dessus sont aptes à ne pas générer lors de l'expansion de la virole 12 munie desdits moyens de protection d'effort supplémentaire par rapport à l'expansion de la virole 12 non revêtue mais ils ne répondent pas simultanément aux critères recherchés d'anti-rayure et d'adhérence. Aux vues des résultats des tableaux 1 et 2, il apparaît nécessaire de combiner un moyen de maintien 11 qui permette à un moyen d'absorption 10 d'éviter la propagation de fissures dans la virole 12 durant l'expansion.

**Tableau 2**

| Résultats des essais d'expansion pour différents matériaux du moyen de protection externe testés avec un taux d'expansion de 15%. | | | |
|---|---|---|---|
| **Matériau** | **Type de moyen de protection** | **Aspect après expansion** | **Effort Mesuré (kDaN)** |
| Zn-Al (85%-15% en poids) | métal | décollement, sans débris | 80-85 |
| Cu-Al (90%-10% en poids) | métal | décollement, avec débris | 80-85 |
| Ni-Al (95%-5% en poids) | métal | décollement, avec débris | 80-85 |
| Acier Manganèse | métal | décollement, sans débris | 80-85 |
| K8161 | élastomère (XHNBR) | sans décollement, sans débris | 80-85 |
| Référence (virole 12 non revêtue) | Acier peu allié | - | 80-85 |

On a choisi par exemple de tester à l'aide du dispositif d'essai d'expansion, décrit ci-dessus, une virole 12 préalablement rayée à l'aide du dispositif de rayure exposé ci-avant et munie extérieurement d'une couche de Zn-Al (85%-15% en poids) d'épaisseur 2 mm comme moyen d'absorption 10 et d'un revêtement en élastomère XHNBR (K8161) d'épaisseur 0,5 mm au-dessus de la couche de Zn-Al et débordant axialement de celle-ci sur la virole comme moyen de maintien 11.

Après expansion et sans effort d'expansion supplémentaire par rapport à une virole nue, la virole ne présente par ailleurs pas de fissure et l'ensemble du revêtement dans l'exemple considéré reste en place sans aucune émission de débris.

## Revendications

1. Elément femelle (2) d'un joint fileté tubulaire apte à subir une expansion diamétrale dans le domaine des déformations plastiques, disposé à une extrémité d'un composant tubulaire (2'), comprenant sur sa périphérie extérieure un moyen d'absorption d'énergie de rayure (10) d'un corps rayant susceptible d'être en contact extérieurement avec l'élément femelle (2) et un moyen de maintien (11) du dit moyen d'absorption d'énergie de rayure (10) destiné à empêcher la libération de débris du dit moyen d'absorption d'énergie de rayure(10) lors d'une expansion du joint fileté tubulaire, lesdits moyens d'absorption d'énergie de rayure (10) et de maintien (11) sont disposés sensiblement à partir de l'extrémité libre de l'élément femelle (9), ledit moyen de maintien (11) est un revêtement réalisé au moins sur ledit moyen d'absorption d'énergie de rayure (10) et déborde axialement dudit moyen d'absorption d'énergie de rayure (10) de manière à recouvrir l'élément femelle (2) sur au moins une partie de celui-ci, **caractérisé en ce que** ledit moyen de maintien (11) comprend un matériau synthétique plastique et ledit moyen d'absorption d'énergie de rayure (10) est en métal ou alliage métallique choisi parmi les métaux et alliages ductiles.

2. Elément femelle selon la revendication précédente, **caractérisé en ce que** les dits moyens d'absorption d'énergie de rayure (10) et de maintien (11) ne se projettent pas axialement au delà de l'extrémité libre de l'élément femelle.

3. Elément femelle selon l'une des revendications précédentes, **caractérisé en ce que** les dits moyens d'absorption d'énergie de rayure (10) et de maintien (11) sont aptes à être disposés sur l'élément femelle (2) en usine lors de la fabrication du dit élément femelle.

4. Elément femelle selon l'une des revendications précédentes, **caractérisé en ce que** le dit moyen d'absorption d'énergie de rayure (10) est une couche déposée sur la surface de l'élément femelle (2).

5. Elément femelle selon la revendication 4, **caractérisé en ce que** la dite couche déposée est accrochée de manière intime avec le substrat.

6. Elément femelle selon l'une des revendications 4 ou 5, **caractérisé en ce que** la dite couche est obtenue par projection thermique par exemple par projection par plasma et par projection HVOF.

7. Elément femelle selon l'une quelconque des revendications précédentes, **caractérisé en ce que** le dit matériau synthétique plastique est renforcé par des particules ou des fibres de matériau dur.

8. Elément femelle selon l'une quelconque des revendications précédentes, **caractérisé en ce que** le dit matériau synthétique ne présente pas de point de fusion ou de ramollissement inférieur ou égal à 150°C.

9. Elément femelle selon l'une quelconque des revendications précédentes, **caractérisé en ce que** le dit matériau synthétique présente un allongement à rupture supérieur à 30% lors d'un essai de traction.

10. Elément femelle selon l'une quelconque des revendications précédentes, **caractérisé en ce que** le dit matériau synthétique est choisi parmi les élastomères.

11. Elément femelle selon l'une des revendications précédentes, **caractérisé en ce que** l'épaisseur totale E de l'ensemble moyen d'absorption d'énergie de rayure (10) et moyen de maintien (11) est comprise entre 0,5 et 5 mm.

12. Elément femelle selon l'une des revendications précédentes, **caractérisé en ce que** l'adhérence entre le dit moyen d'absorption d'énergie de rayure (10) et le dit moyen de maintien (11) et/ou la périphérie extérieure de l'élément femelle (2) est améliorée par l'application d'une peinture d'adhérisation sur le dit moyen d'absorption d'énergie de rayure (10) et/ou la partie de la dite périphérie extérieure de l'élément femelle (2) en contact avec le dit moyen de maintien (11).

13. Joint fileté tubulaire comprenant un élément femelle (2) selon l'une des revendications précédentes et un élément mâle (1) apte à coopérer par vissage avec le dit élément femelle (2) **caractérisé par le fait qu'**il n'y a pas de contact entre le dit élément mâle (1) et les dits moyens d'absorption (10) et de maintien (11).

## Patentansprüche

1. Muffenelement (2) einer rohrförmigen Gewindeverbindung, die eine diametrale Dehnung im Bereich der plastischen Verformungen erfahren kann, das an einem Ende einer rohrförmigen Komponente (2') angeordnet ist, welches auf seiner Außenseite ein Element zur Absorption von Kratzenergie (10) eines kratzenden Körpers aufweist, welcher von außen mit dem Muffenelement (2) in Berührung kommen kann, sowie ein Haltemittel (11) des Mittels zur Absorption von Kratzenergie (10), welches dazu bestimmt ist, das Freisetzen von Spänen des Mittels zur Absorption von Kratzenergie (10) während einer Dehnung der rohrförmigen Gewindeverbindung zu verhindern, wobei das Mittel zur Absorption von Kratzenergie (10) und das Haltemittel (11) im Wesentlichen ausgehend von dem freien Ende des Muffenelements (9) angeordnet sind, wobei das Haltemittel (11) eine Beschichtung ist, die mindestens auf dem Mittel zur Absorption von Kratzenergie (10) aufgetragen ist und axial über dem Mittel zur Absorption von Kratzenergie (10) derart übersteht, dass es das Muffenelement (2) wenigstens auf einem Teilbereich von diesem überdeckt,
**dadurch gekennzeichnet, dass** das Haltemittel (11) ein synthetisches verformbares Material aufweist und das Mittel zur Absorption von Kratzenergie (10) aus Metall oder einer Metalllegierung besteht, gewählt aus den verformbaren Metallen und Legierungen.

2. Muffenelement nach dem vorstehenden Anspruch, **dadurch gekennzeichnet, dass** das Mittel zur Absorption von Kratzenergie (10) und das Haltemittel (11) sich axial nicht über das freie Ende des Muffenelements hinaus erstrecken.

3. Muffenelement nach einem der vorstehenden Ansprüche, **dadurch gekennzeichnet, dass** das Mittel zur Absorption von Kratzenergie (10) und das Haltemittel (11) auf dem Muffenelement (2) in einer Fabrik oder während der Herstellung des Muffenelements angeordnet werden können.

4. Muffenelement nach einem der vorstehenden Ansprüche, **dadurch gekennzeichnet, dass** das Mittel zur Absorption von Kratzenergie (10) eine Schicht ist, die auf der Oberfläche des Muffenelements (2) aufgetragen ist.

5. Muffenelement nach Anspruch 4, **dadurch gekennzeichnet, dass** die aufgetragene Schicht innig mit dem Substrat verbunden ist.

6. Muffenelement nach einem der Ansprüche 4 oder 5, **dadurch gekennzeichnet, dass** die Schicht erhalten ist durch thermisches Aufspritzen, zum Beispiel durch Plasmaaufspritzen und durch Hochgeschwindigkeits-Flammspritzen (HVOF).

7. Muffenelement nach einem der vorstehenden Ansprüche, **dadurch gekennzeichnet, dass** das verformbare synthetische Material verstärkt ist mit Partikeln oder Fasern aus einem harten Material.

8. Muffenelement nach einem der vorstehenden Ansprüche, **dadurch gekennzeichnet, dass** das synthetische Material keinen Schmelzpunkt oder Erweichungspunkt aufweist, der kleiner oder gleich 150 °C ist.

9. Muffenelement nach einem der vorstehenden Ansprüche, **dadurch gekennzeichnet, dass** das synthetische Material während eines Zugversuchs um 30 % verlängert werden kann, bevor es reißt.

10. Muffenelement nach einem der vorstehenden Ansprüche, **dadurch gekennzeichnet, dass** das synthetische Material unter den Elastomeren ausgewählt ist.

11. Muffenelement nach einem der vorstehenden Ansprüche, **dadurch gekennzeichnet, dass** die Gesamtdicke E der Einheit bestehend aus dem Mittel zur Absorption von Kratzenergie (10) und dem Haltemittel (11) zwischen 0,5 und 5 mm liegt.

12. Muffenelement nach einem der vorstehenden Ansprüche, **dadurch gekennzeichnet, dass** das Anhaften zwischen dem Mittel zur Absorption von Kratzenergie (10) und dem Haltemittel (11) und/oder der Außenseite des Muffenelements (2) verbessert ist durch das Auftragen eines Haftanstrichs auf dem Mittel zur Absorption von Kratzenergie (10) und/oder dem Teilbereich der Außenseite des Muffenelements (2), welcher in Kontakt mit dem Haltemittel (11) steht.

13. Rohrförmige Gewindeverbindung mit einem Muffenelement (2) nach einem der vorstehenden Ansprüche und einem Außengewindeelement (1), welches mit dem Muffenelement (2) durch Verschraubung zusammenwirken kann, **dadurch gekennzeichnet, dass** es keine Berührung zwischen dem Außengewindeelement (1) und dem Absorptionsmittel (10) und dem Haltemittel (11) gibt.

## Claims

1. A female element (2) of a threaded tubular connection which is fitted to undergo diametrical expansion in the plastic deformation region, disposed at one end of a tubular component (2'), comprising on its external periphery a means (10) for absorbing the scratch energy from a scratching body which may come into external contact with the female element (2), and a means (11) for retaining said scratch energy absorption means (10), intended to prevent the release of debris from said scratch energy absorption means (10) during expansion of the threaded tubular connection, said means for absorbing the scratch energy (10) and for retaining (11) are disposed substantially from the free end of the female element (9), said retaining means (11) is a coating carried out on at least said means for absorbing the scratch energy (10) and goes axially beyond said means for absorbing the scratch energy (10) so as to cover the female element (2) on at least a part of it, **characterized in that** said means for retaining (11) comprises a synthethic plastic material and said means for absorbing the scratch energy (10) is made of metal or metallic alloy selected among ductile metals and alloys.

2. A female element according to the preceding claim, **characterized in that** said scratch energy absorption means (10) and said retaining means (11) do not extend axially beyond the free end of the female element (2).

3. A female element according to one of the preceding claims, **characterized in that** said scratch energy absorption means (10) and retaining means (11) are fitted to be disposed in the plant on the female element (2) during the manufacturing of said female element.

4. A female element according to one of the preceding claims, **characterized in that** said scratch energy absorption means (10) is a layer deposited on the surface of the female element (2).

5. A female element according to claim 4, **characterized in that** said deposited layer is attached in an intimate way to the substrate.

6. A female element according to one of claims 4 or 5, **characterized in that** said layer is obtained by thermal spraying for example plasma spraying and HVOF spraying.

7. A female element according to any of the preceding claims, **characterized in that** said synthetic plastic material is reinforced with particles or fibres of hard material.

8. A female element according to any of the preceding claims, **characterized in that** said synthetic plastic material does not have a melting or softening point of 150°C or less.

9. A female element according to any of the preceding claims, **characterized in that** said synthetic plastic material has an elongation at rupture of more than 30% during a tensile test.

10. A female element according to any of the preceding claims, **characterized in that** said synthetic plastic material is selected from elastomers.

11. A female element according to any of the preceding claims, **characterized in that** the total thickness E of the scratch energy absorption means (10) and the retaining means (11) is in the range 0.5 to 5 mm.

12. A female element according to any of the preceding claims, **characterized in that** the adhesion between said scratch energy absorption means (10) and said retaining means (11) and/or the external periphery of the female element (2) is improved by applying an adhesion priming paint to said scratch energy absorption means (10) and/or the portion of said external periphery of the female element (2) in contact with said retaining means (11).

13. A threaded tubular connection comprising a female element (2) according to one of the preceding claims and a male element (1) which is fitted to cooperate by make up with said female element (2), **characterized in that** there is no contact between said male element (1) and said absorption (10) and retaining (11) means.
